# EUROPEAN PATENT APPLICATION

(11) **EP 4 394 156 A1**
(43) Date of publication of application: **03.07.2024**
(21) Application number: 22914807.7
(22) Date of filing: 27.12.2022
(51) Int. Cl.: E05F 15/73, E05F 15/70, F25D 23/02, E05B 81/56, B64D 41/00, E05F 15/622

(54) **VEHICLE DOOR SYSTEM AND VEHICLE**

(30) Priority: 30.12.2021 CN 202111651507
(71) Applicant: BYD Company Limited, Shenzhen, Guangdong 518118 (CN)
(72) Inventor: GAO, Jie, Shenzhen, Guangdong 518118 (CN); TIAN, Hongsheng, Shenzhen, Guangdong 518118 (CN); ZHOU, Qianqian, Shenzhen, Guangdong 518118 (CN); LI, Fangqin, Shenzhen, Guangdong 518118 (CN); WANG, Long, Shenzhen, Guangdong 518118 (CN)
(74) Representative: Arnold & Siedsma
(86) International application number: PCT/CN2022/142410
(87) International publication number: WO 2023/125554

(57) **Abstract**

A vehicle has a vehicle door system, and the vehicle door system includes a vehicle door, an actuating mechanism, and a controller. The vehicle door is mechanically coupled and connected to a vehicle body. The actuating mechanism is connected to the vehicle door and is configured to control a state of the vehicle door. The controller is configured to control, according to a current working mode of the vehicle door system, the actuating mechanism to control the state of the vehicle door. The working mode includes at least: an electric mode, where in the electric mode, the controller is configured to control the actuating mechanism to drive the vehicle door to open or close; a suspended mode, where in the suspended mode, the controller is configured to control the actuating mechanism to keep the vehicle door suspended; and a manual mode, where in the manual mode, the controller is configured to control, according to an external force acting on the vehicle door, the actuating mechanism to drive the vehicle door to move.

## Description

### CROSS-REFERENCE TO RELATED APPLICATIONS

The present disclosure claims priority to and benefits of Chinese Patent Application No. 202111651507.X, filed on December 30, 2021 and entitled "VEHICLE DOOR SYSTEM AND VEHICLE". The entire content of the above-referenced application is incorporated herein by reference.

### FIELD

The present disclosure relates to the field of vehicle technologies, and more specifically, to a vehicle door system and a vehicle.

### BACKGROUND

As people's demand for vehicles is increasing, a vehicle door, as a mechanism for passengers to get on or off, has an increasing demand for automation and intelligence. For a conventional vehicle door, an outer handle of the door needs to be manually pulled, and a vehicle door lock is unlocked through a mechanical structure connection. After unlocking, the vehicle door further needs to be pushed to get on or off. The process is cumbersome. Especially, when a passenger has both hands occupied and it is inconvenient to operate the handle of the vehicle door, it is more difficult for the passenger to get on or off.

### SUMMARY

A series of simplified concepts are introduced in the Summary section of the present disclosure, which will be described in further detail in the Detailed Description section. The Summary section of the present disclosure is not intended to limit the critical features and essential technical features of the claimed technical solutions, and is not intended to determine the scope of protection of the claimed technical solutions either.

In view of the deficiencies of the related art, embodiments of the present disclosure provide a vehicle door system, including a vehicle door, an actuating mechanism, and a controller, where the vehicle door is mechanically coupled and connected to a vehicle body; the actuating mechanism is connected to the vehicle door and is configured to control a state of the vehicle door; and the controller is configured to control, according to a current working mode of the vehicle door system, the actuating mechanism to control the state of the vehicle door, where the working mode includes at least: an electric mode, where in the electric mode, the controller is configured to control the actuating mechanism to drive the vehicle door to open or close; a suspended mode, where in the suspended mode, the controller is configured to control the actuating mechanism to keep the vehicle door suspended; and a manual mode, where in the manual mode, the controller is configured to control, according to an external force acting on the vehicle door, the actuating mechanism to drive the vehicle door to move.

In an embodiment, the manual mode includes at least one of the following: a manual assistance mode, a manual slam-proof protection mode, a manual interference mode, and a manual trend door closing mode, where in the manual assistance mode, the controller is configured to control the actuating mechanism to provide the vehicle door with a driving force in a direction the same as a movement direction of the vehicle door; in the manual slam-proof protection mode, the controller is configured to control the actuating mechanism to provide the vehicle door with a driving force in a direction opposite to the movement direction of the vehicle door; in the manual interference mode, the controller is configured to control, according to the external force applied to the vehicle door, the actuating mechanism to drive the vehicle door to open or close at a preset speed; and in the manual trend door closing mode, the controller is configured to control, according to manual door closing trend information, the actuating mechanism to drive the vehicle door to close.

In an embodiment, the manual assistance mode includes: when the manual assistance mode is in an on state, the controller is configured to obtain an initial acceleration and an edge covering speed of the vehicle door; and when the initial acceleration is greater than or equal to a first acceleration threshold and the edge covering speed of the vehicle door is less than a first speed threshold, the controller is configured to control the actuating mechanism to provide the vehicle door with a driving force in a direction the same as the movement direction of the vehicle door.

In an embodiment, the manual assistance mode further includes: when the vehicle door moves in a door opening direction, the controller is configured to obtain environment information on a movement path of the vehicle door in real time; and if it is determined according to the environment information that an obstacle exists on the movement path of the vehicle door, the controller is configured to control the actuating mechanism to stop providing the driving force.

In an embodiment, the manual assistance mode further includes: when the vehicle door moves in a door closing direction, the controller is configured to obtain force information of the vehicle door in real time; and if it is determined according to the force information that the vehicle door is subjected to a force preventing the vehicle door from moving, the controller is configured to control the actuating mechanism to stop providing the driving force.

In an embodiment, the manual slam-proof protection mode includes: when the manual slam-proof protection mode is in an on state, the controller is configured to obtain an initial acceleration and an edge covering speed of the vehicle door; and when the initial acceleration is greater than or equal to a second acceleration threshold and the edge covering speed of the vehicle door is less than a second speed threshold, the controller is configured to control the actuating mechanism to provide the vehicle door with a driving force in a direction opposite to the movement direction of the vehicle door.

In an embodiment, the manual slam-proof protection mode further includes: when the vehicle door moves in the door opening direction, the controller is configured to obtain environment information on a movement path of the vehicle door in real time, and output prompt information if it is determined according to the environment information that an obstacle exists on the movement path of the vehicle door; and when the vehicle door moves in the door closing direction, the controller is configured to obtain force information of the vehicle door in real time, and output prompt information if it is determined according to the force information that the vehicle door is subjected to a force preventing the vehicle door from moving.

In an embodiment, the manual interference mode further includes: when the actuating mechanism drives the vehicle door to open or close, the controller is configured to obtain edge covering speed information of the vehicle door in real time; and if it is determined according to the edge covering speed information that the edge covering speed is not equal to a third speed threshold, the controller is configured to control the actuating mechanism to drive the vehicle door to move at the third speed threshold.

In an embodiment, the manual trend door closing mode includes: when the manual trend door closing mode is in an on state, the manual assistance mode is in an off state, and the vehicle door is in an opened state or a suspended state, the controller is configured to obtain acceleration information and edge covering speed information of the vehicle door; and when it is determined according to the acceleration information that the initial acceleration is greater than or equal to a fourth acceleration threshold and the edge covering speed is less than a fourth speed threshold, the controller is configured to control the actuating mechanism to drive the vehicle door to close.

In an embodiment, the electric mode includes at least one of an automatic door opening mode and an automatic door closing mode, where in the automatic door opening mode, the controller is configured to control the actuating mechanism to drive the vehicle door to open; and in the automatic door closing mode, the controller is configured to control the actuating mechanism to drive the vehicle door to close.

In an embodiment, the automatic door opening mode includes: when the vehicle door is closed, if the controller is configured to obtain a door opening instruction, the controller is configured to control a door lock of the vehicle door to be unlocked, and control the actuating mechanism to drive the vehicle door to open.

In an embodiment, the automatic door opening mode further includes: before controlling the door lock of the vehicle door to be unlocked, the controller is configured to obtain environment information on a movement path of the vehicle door, and determine according to the environment information that no obstacle exists on the movement path of the vehicle door.

In an embodiment, that the controller is configured to control the actuating mechanism to drive the vehicle door to open further includes: the controller is configured to obtain environment information on a movement path of the vehicle door, and controls the vehicle door to be in the suspended state if it is determined according to the environment information that an obstacle exists on the movement path of the vehicle door.

In an embodiment, that the controller is configured to control the actuating mechanism to drive the vehicle door to open further includes: the controller is configured to obtain force information of the vehicle door, and controls the vehicle door to be in the suspended state if it is determined according to the force information that the vehicle door is subjected to a first resistance and the first resistance is greater than or equal to a first resistance value.

In an embodiment, the automatic door closing mode includes: when the vehicle door is in the opened state or the suspended state, if the controller obtains a door closing instruction, the controller is configured to control the actuating mechanism to drive the vehicle door to close, and control the door lock of the vehicle door to be locked.

In an embodiment, that the controller is configured to control the actuating mechanism to drive the vehicle door to close includes: the controller is configured to obtain force information of the vehicle door, and control the vehicle door to be in the suspended state if it is determined according to the force information that the vehicle door is subjected to a second resistance and the second resistance is greater than or equal to a second resistance value.

In an embodiment, the suspended mode includes: when the vehicle door moves in the door opening direction or the door closing direction, the controller is configured to control the vehicle door to be in the suspended state if the controller receives a suspension instruction.

Another aspect of the embodiments of the present disclosure provides a vehicle, including a vehicle body and the foregoing vehicle door system.

Based on the vehicle door system and the vehicle of the embodiments of the present disclosure, the vehicle door system is classified into different working modes, to facilitate algorithm implementation and improve user experience.

### BRIEF DESCRIPTION OF THE DRAWINGS

Through a more detailed description of embodiments of the present disclosure in combination with the accompanying drawings, the above and other objectives, features and advantages of the present disclosure are more obvious. The accompanying drawings are used to provide further comprehension of the embodiments of the present disclosure, and as a part of the specification, the accompanying drawings are used for illustrating the present disclosure together with the embodiments of the present disclosure, but do not limit the present disclosure. In the drawings, same reference numerals generally represent same components or steps.
FIG. 1 is a schematic block diagram of a vehicle door system according to an embodiment of the present disclosure; and
FIG. 2 is a schematic diagram of switching between working modes of a vehicle door system according to an embodiment of the present disclosure.

### DETAILED DESCRIPTION

To make the objectives, technical solutions, and advantages of the present disclosure more obvious, exemplary embodiments of the present disclosure are described in detail below with reference to the accompanying drawings. Apparently, the described embodiments are merely some but not all of the embodiments of the present disclosure. It should be understood that, the present disclosure is not limited by the exemplary embodiments described herein. All other embodiments obtained by a person skilled in the art based on the embodiments of the present disclosure described in the present disclosure without creative efforts shall fall within the protection scope of the present disclosure.

In the following description, numerous specific details are given to facilitate a more thorough understanding of the present disclosure. However, it is obvious to those skilled in the art that the present disclosure can be implemented without one or more of these details. In other examples, to avoid confusion with the present disclosure, some technical features known in the art are not described

It should be understood that the present disclosure can be implemented in different forms and should not be construed as being limited to the embodiments presented herein. Conversely, these embodiments are provided for the purpose of making the disclosure thorough and complete, and conveying the scope of the present disclosure fully to those skilled in the art.

The terms are used herein merely for purpose of describing specific embodiments and not as a limitation of the present disclosure. When used herein, the singular forms "a", "an" and "the" are also meant to include the plural form, unless otherwise clearly indicated. It should also be understood that the terms "containing" and/or "including", when used in this specification, confirm the existence of the described features, integers, steps, operations, elements and/or components, but do not exclude the existence or addition of one or more other features, integers, steps, operations, elements, components and/or groups. As used herein, the term "and/or" includes any and all combinations of related listed items.

For the purpose of thoroughly understanding the present disclosure, a detailed structure will be presented in the following description to explain the technical solution proposed in the present disclosure. Optional embodiments of the present disclosure are described in detail as follows. However, besides these detailed descriptions, the present disclosure may also have other implementations.

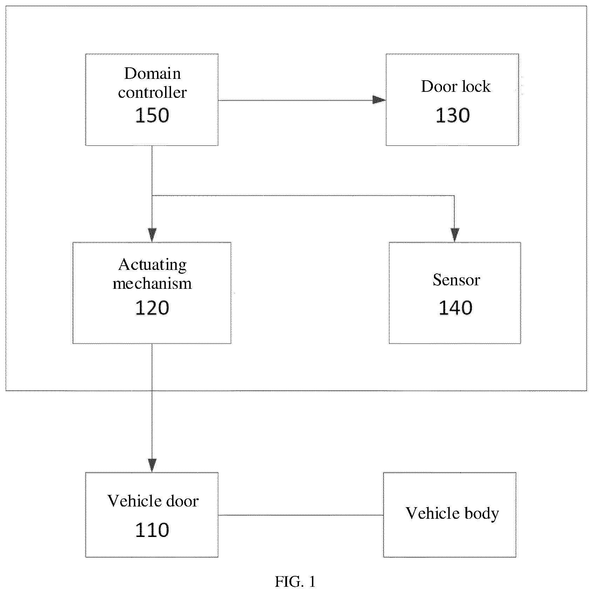

The following describes a vehicle door system and a vehicle provided in the embodiments of the present disclosure with reference to the accompanying drawings. First, referring to FIG. 1, FIG. 1 is a schematic block diagram of a vehicle door system according to an embodiment of the present disclosure. As shown in FIG. 1, the vehicle door system of this embodiment of the present disclosure includes a vehicle door 110, an actuating mechanism 120, and a controller 150, where the vehicle door 110 is mechanically coupled and connected to a vehicle body; the actuating mechanism 120 is connected to the vehicle door 110 and is configured to control a state of the vehicle door 110; and the controller 150 is configured to control, according to a current working mode of the vehicle door system, the actuating mechanism 120 to control the state of the vehicle door 110, where the working mode includes at least: an electric mode, where in the electric mode, the controller 150 is configured to control the actuating mechanism 120 to drive the vehicle door 110 to open or close; a suspended mode, where in the suspended mode, the controller 150 is configured to control the actuating mechanism to keep the vehicle door 110 suspended; and a manual mode, where in the manual mode, the controller 150 is configured to control, according to an external force acting on the vehicle door 110, the actuating mechanism 120 to drive the vehicle door 110 to move.

In some embodiments, the vehicle door system further includes a sensor 140, and the sensor 140 may be arranged on the vehicle door 110 or in another position on a vehicle, includes but not limited to a radar, a camera, or another sensor, and is configured to detect an obstacle on an opening path in an opening process of the vehicle door 110. In some embodiments, the vehicle door system further includes a door lock 130, configured to lock the vehicle door 110, and the door lock 130 may be an electrical unlocking and suction lock.

Specifically, the vehicle door 110 is a vehicle door assembly and is connected to a vehicle body (that is, a vehicle body assembly) through a hinge. For example, the vehicle door assembly includes an inner vehicle door plate, an outer vehicle door plate, a reinforced support structure, and a sealing structure.

In addition to being connected through the hinge, the vehicle door 110 is further connected to the vehicle body through the actuating mechanism 120. The actuating mechanism 120 is configured to drive the vehicle door 110 to perform a door opening action or door closing action. For example, the actuating mechanism 120 is integrated with a vehicle door speed sensor or acceleration sensor, and a driving motor of the actuating mechanism 120 is integrated with a Hall sensor, configured to monitor the magnitude of a movement speed or movement acceleration of the vehicle door 110.

The controller 150 is configured to obtain vehicle door movement information and ambient environment information, and control, according to the vehicle door movement information and the environment information, the actuating mechanism 120 to control the vehicle door 110 to move. The vehicle door movement information and the environment information obtained by the controller 150 may be obtained from the sensor of the vehicle door system, or may be obtained from the vehicle. For example, when the actuating mechanism 120 receives signal input from the controller 150, the driving motor rotates positively or negatively, to open or close the vehicle door 110. The controller 150 controls the magnitude of an output force value of the actuating mechanism 120. In addition, the actuating mechanism 120 integrated with the vehicle door speed sensor or acceleration sensor feeds a speed signal or an acceleration signal back to the controller 150, and the controller 150 implements real-time dynamic compensation of the vehicle door 110 through an algorithm.

The controller 150 is further configured to control functions of the door lock 130 such as suction, electrical unlocking, child safety lock, and safety-off. In addition, the door lock 130 feeds a half-lock signal, a full-lock signal, or a full-unlock signal of the door lock back to the controller 150. The door lock 130 is mounted on a metal sheet of the vehicle door assembly, and receives a signal from the controller 150, to implement actions such as electrical unlocking and suction of the lock body. For example, the door lock 130 further has an ice-breaking function, and an ice-breaking force is greater than or equal to 400 N.

For example, the sensor 140 includes a radar, and the radar may be mounted on the metal sheet of the vehicle door assembly, to detect an obstacle on an opening path in an opening process of the vehicle door 110. The controller 150 controls a wake-up condition of the sensor 140 and determines an obstacle, and the sensor 140 feeds an obstacle signal and a distance back to the controller 150, to perform obstacle avoidance processing.

For example, the sensor 140 further includes a safety belt sensor, configured to collect a lock-up signal of a safety belt buckle. The sensor 140 may further include a gravity sensor, an infrared temperature sensor, or an image sensor under a seat, configured to detect whether there is a passenger on the seat. In addition, the sensor 140 may further include an apparatus configured to detect a signal of an induction key, an electronic key, door opening with an outer handle, a knocking signal sensor, a voice instruction, an NFC instruction, a central control screen instruction, an inner door handle, an in-vehicle button, or the like, and the sensor 140 may send the detected signal to the controller 150.

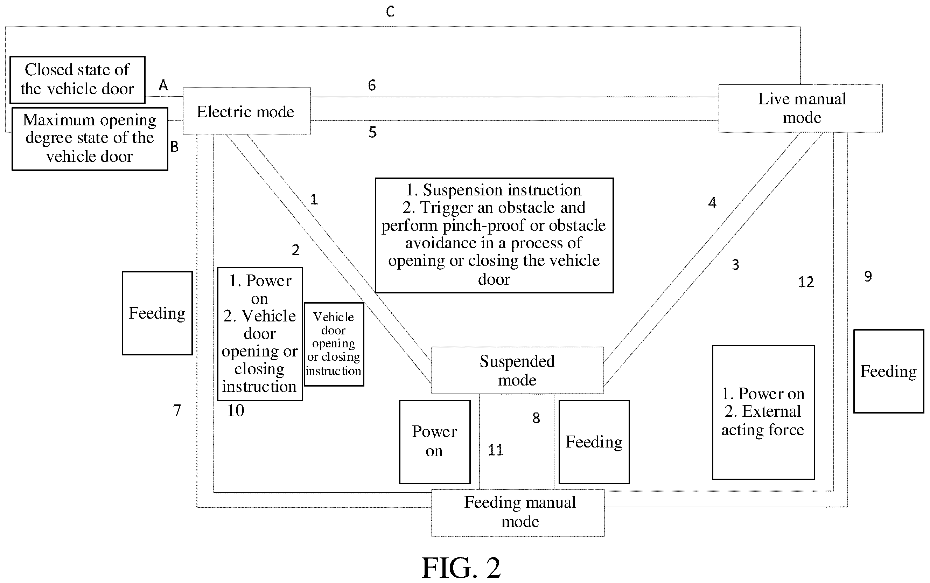

Based on the embodiments of the present disclosure, the vehicle door system is classified into different working modes, to facilitate implementation of a subsequent control module algorithm; and achieve modularization design and higher design efficiency. FIG. 2 is a schematic diagram of switching between working modes of a vehicle door system according to an embodiment of the present disclosure. The working modes of the vehicle door system of this embodiment of the present disclosure include at least an electric mode, a suspended mode, and a manual mode, and are specifically described as follows:

### 1. Electric mode

In the electric mode, the controller 150 is configured to control the actuating mechanism 120 to drive the vehicle door 110 to open or close. For example, the electric mode includes at least one of an automatic door opening mode and an automatic door closing mode. In the automatic door opening mode, the controller 150 is configured to control the actuating mechanism 120 to drive the vehicle door 110 to open; and in the automatic door closing mode, the controller 150 is configured to control the actuating mechanism 120 to drive the vehicle door 110 to close.

### 1. Automatic door opening mode

For example, a working condition of the automatic door opening mode is that the whole vehicle is safety-off and is in a non-anti-theft state, to ensure safety of the vehicle. The safety-off of the whole vehicle means that, after an unlock button of the whole vehicle is pressed, the vehicle is unlocked, and the vehicle door enters an openable state. The automatic door opening mode includes: when the vehicle door is closed, if the controller 150 is configured to obtain a door opening instruction, the controller is configured to control a door lock of the vehicle door to be unlocked, and control the actuating mechanism 120 to drive the vehicle door 110 to open. The door opening instruction includes at least one of the following: an induction key signal, an electronic key signal, a signal of door opening with an outer handle, a knocking signal, a voice door opening instruction, an NFC door opening instruction, a central control screen door opening instruction, a signal of pulling an inner door handle, an in-vehicle button signal, and the like. In some embodiments, a trigger condition of the automatic door opening mode further includes that the controller 150 detects that the vehicle is in the non-anti-theft state.

For example, when an automatic door opening function is implemented, the controller 150 is configured to control the door lock 130 to perform electric unlocking. When detecting a change of the door lock 130 from "full-lock, to half-lock, and to full-unlock", the controller 150 is configured to control the actuating mechanism 120 to open the vehicle door.

For example, before controlling the actuating mechanism 120 to open the vehicle door, the controller 150 is configured to first obtain environment information on a movement path of the vehicle door, and determine according to the environment information that no obstacle exists on the movement path of the vehicle door. For example, the controller 150 wakes the radar up, and obtains the environment information through the radar. The radar performs obstacle detection around the vehicle door 110, and sends, when determining that there is no obstacle around the vehicle door 110, determination information that there is no obstacle around the vehicle door to the controller 150, and the controller 150 can control the door lock to be unlocked only after receiving the determination information, to perform automatic door opening, thereby preventing the vehicle door 110 from colliding with an obstacle. If the radar detects, after being woken up, that an obstacle exists around the vehicle door 110, the radar feeds collected obstacle distance information back to the controller 150. The controller 150 determines whether the door may be opened according to an obstacle distance and a door opening angle, refuses to execute the door opening instruction if the door opening angle is less than a minimum door opening angle, and prompts the user that "The vehicle door opening angle is too small. Please manually open the door". Prompt manners include but not limited to a central control screen, a dashboard, display of an HUD display system, voice prompt, prompt through a handheld mobile terminal, and the like.

Further, in an opening process of the vehicle door, the controller 150 is configured to continuously obtain environment information on a movement path of the vehicle door, and control the vehicle door to be in the suspended state if it is determined according to the environment information that an obstacle exists on the movement path of the vehicle door. Still using a radar as an example, in a door opening process, the radar continues to perform monitoring in real time around the vehicle door. When the vehicle door is opened to a maximum arranged suspension position, the radar stops detection. If the radar detects that an obstacle exists around the vehicle door 110, the controller 150 is configured to control the actuating mechanism 120 to stop providing a driving force, so that the vehicle door 110 is suspended. For example, the controller 150 controls the vehicle door to be suspended in a position at a distance ranging from 20 cm to 30 cm from the obstacle.

In an opening process of the vehicle door, the controller 150 controls the vehicle door to be in the suspended state if it is determined according to the force information of the vehicle door that the vehicle door is subjected to a first resistance and the first resistance is greater than or equal to a first resistance value. For example, if the vehicle door collides with an obstacle in a blind zone of detection of the radar, or a person manually prevents the vehicle door from opening, when the controller 150 detects an external force preventing the door from opening, and the external force acting on the vehicle door 110 and preventing the door from opening is greater than or equal to the first resistance value, the controller is configured to immediately control the actuating mechanism 120 to stop providing a driving force, so that the vehicle door is suspended. For example, when detecting that the current of the actuating mechanism 120 is greater than or equal to a locked-rotor current or a change of a signal value of the sensor in a short time exceeds a specific threshold, the controller 150 may determine that an external force is preventing the door from opening. The sensor includes but not limited to a Hall sensor.

### 2. Automatic door closing mode

A working condition of the automatic door closing mode may be any operating condition. A trigger condition of the automatic door closing mode includes: When the vehicle door is in the opened state or suspended state, the controller 150 is configured to detect a door closing instruction, for example, senses that the key is far away, the user is braking, or the central control screen receives a door closing instruction, obtains a safety belt closed signal, receives a voice door closing instruction, detects that the user is pulling the inner door handle or outer handle, presses an in-vehicle button, detects that the vehicle speed exceeds a specific threshold, or senses NFC or a manual door closing trend.

An actuating action in the automatic door closing mode includes: The controller 150 is configured to control the actuating mechanism to drive the vehicle door to close, and control the door lock of the vehicle door to be locked. When detecting a signal change of the door lock 130 from full-unlock to half-lock, the controller 150 is configured to drive the door lock 130 to perform automatic suction, to complete locking.

To ensure safety of the vehicle, in the process in which the controller 150 drives the actuating mechanism 120 to drive the vehicle door to close, the controller 150 is configured to obtain force information of the vehicle door 110, and control the vehicle door 110 to be in the suspended state if it is determined according to the force information that the vehicle door 110 is subjected to a second resistance and the second resistance is greater than or equal to a second resistance value. For example, the domain controller 150 determines force information of the vehicle door 110 according to the current of the motor of the actuating mechanism. If the controller 150 detects that the current of the motor of the actuating mechanism 120 is greater than a preset locked-rotor current (for example, the current is greater than or equal to 7 A), the controller 150 is configured to immediately control the actuating mechanism 120 to stop driving the vehicle door to close, and the vehicle door is immediately suspended in a current position. Alternatively, the controller 150 may immediately drive the motor of the actuating mechanism 120 to rotate negatively in this case, so that the vehicle door is opened to a maximum opening position.

### 2. Suspended mode

That the vehicle door 110 is in a suspended state indicates that the vehicle door 110 ceases actions in the opening or closing process, so that the vehicle door 110 is in a non-full-open state. The suspended mode includes: When the vehicle door moves in the door opening direction or the door closing direction, the controller 150 controls the vehicle door to be in the suspended state if the controller receives a suspension instruction.

A working condition of the suspended mode may be any operating condition. For example, a trigger condition of the suspended mode includes: The suspension instruction received by the domain controller 150 includes but not limited to, a suspension instruction collected by the central control screen, a safety belt closed signal, a voice suspension instruction, a signal of pulling the inner door handle, a signal of an in-vehicle button, a signal of pulling the outer handle, an NFC suspension instruction, a door opening pinch-proof signal, a door closing pinch-proof signal, a braking signal, a signal of an electronic key, a knocking signal, an obstacle signal sent by the radar (for example, there is an obstacle in a door opening direction, or there is an obstacle moving toward the vehicle door in a posterior and lateral direction), and the like.

For example, if the user taps a virtual vehicle door suspension button on the central control screen in an opening process of the vehicle door, a multimedia host sends a suspension instruction to the controller 150. In an opening process of the vehicle door, if the user locks the safety belt, and the controller 150 detects a signal sent when the safety belt buckle is changed from the opened state to the closed state, and a function item of locking the safety belt and electrically closing the vehicle door is enabled in the system, the vehicle door is suspended. In an opening process of the vehicle door, if the user sends a voice signal of stopping door opening, the multimedia host delivers a suspension instruction of the vehicle door to the controller 150 immediately after receiving a voice instruction. In an opening process of the vehicle door, if the controller 150 detects an external force preventing the door from opening (for example, detects a change of the current of the actuating mechanism 120, where the current ≥ 7 A; or detects a Hall change in a short time), pinch-proof and suspension are triggered. In an opening process of the vehicle door, if the radar detects an obstacle, the vehicle door is suspended in a position at a distance ranging from 20 to 30 cm from the obstacle.

In a closing process of the vehicle door, when detecting a suspension instruction of the vehicle door 110, the controller 150 similarly controls the vehicle door 110 to be suspended. For example, if the user taps the virtual vehicle door suspension button on the central control screen in a closing process of the vehicle door, the multimedia host sends a suspension instruction to the controller 150. Alternatively, in a closing process of the vehicle door, if the user sends a voice of stopping closing, the multimedia host delivers a suspension instruction to the controller 150 immediately after receiving a voice instruction. If an external force is preventing the door from closing in a closing process of the vehicle door, when the controller 150 detects an external force preventing the door from closing (for example, detects a change of the current of the motor of the actuating mechanism 120, where the current ≥7 A; or detects a Hall change in a short time), pinch-proof and suspension are triggered.

An actuating action in the suspended mode is that after receiving a suspension instruction of the vehicle door, the controller 150 immediately stops driving, so that the vehicle door 110 is immediately suspended in a current position.

### 3. Manual mode

For example, the manual mode includes the following several types: a manual assistance mode, a manual slam-proof protection mode, a manual interference mode, and a manual trend door opening/closing mode. In the manual assistance mode, the controller 150 is configured to control the actuating mechanism 120 to provide the vehicle door 110 with a driving force in a direction the same as a movement direction of the vehicle door; in the manual slam-proof protection mode, the controller 150 is configured to control the actuating mechanism 120 to provide the vehicle door 110 with a driving force in a direction opposite to the movement direction of the vehicle door; in the manual interference mode, the controller 150 is configured to control, according to the external force applied to the vehicle door 110, the actuating mechanism 120 to drive the vehicle door to open or close at a preset speed; and in the manual trend door closing mode, the controller 150 is configured to control, according to manual door closing trend information acting on the vehicle door 110, the actuating mechanism 120 to drive the vehicle door 110 to open or close. In this embodiment of the present disclosure, several functions of a live manual mode are defined, so that the vehicle door system has a higher intelligence level, and can better satisfy user demands, thereby improving user experience.

### 1. Manual assistance mode

The manual assistance mode is configured to provide assistance for manual door opening or closing. A use habit of a passenger for a conventional vehicle door usually requires that an operating force is small in a door opening or closing process, and the manual assistance mode can achieve an objective of providing the vehicle door with a small operating force. When the vehicle door is motionless, if the vehicle door is opened or closed manually, the vehicle door automatically provides an adjustable compensation force for overcoming the mechanical internal resistance of the vehicle door system, so that an operating force for opening or closing the door with a hand of the user is adjustable. In the manual assistance mode, when the manual operating force disappears, the vehicle door stops moving.

Use scenarios of the manual assistance mode mainly include: In a parking lot, in a case that a parking space is very narrow, manual intervention is implemented to open or close the vehicle door with a small angle. In the mode, a switch needs to be arranged in the system, is used under a special operating condition, and is turned off in time, to avoid affecting normal functions of the vehicle door system.

A trigger condition of the manual assistance mode includes at least:
(1) The manual assistance mode is in an on state. For example, the vehicle door is currently in a suspended state or an opened state (that is, an initial speed of the vehicle door is 0), and the opened state is a maximum opening degree state.
(2) The controller obtains an initial acceleration and an edge covering speed of the vehicle door, and determines that the initial acceleration is greater than or equal to the first acceleration threshold and the edge covering speed is less than the first speed threshold. Specifically, when an external force acts on the vehicle door 110, the vehicle door 110 obtains an initial acceleration, and vehicle door acceleration information may be obtained through the acceleration sensor integrated in the actuating mechanism 120. The sensor attached to the actuating mechanism 120 may also obtain vehicle door state information, and the edge covering speed of the vehicle door may be obtained through a corresponding algorithm. The sensor includes but not limited to a Hall sensor. The edge covering speed of the vehicle door is a linear speed of the vehicle door in an edge covering position. When the initial acceleration is greater than or equal to the first acceleration threshold, and the edge covering speed of the vehicle door is less than the first speed threshold, it indicates that the user has an intention of opening or closing the door, but the door opening or closing speed does not reach an expected speed. Starting the manual assistance mode in this case can provide assistance for door opening or closing. For example, when the initial acceleration of the vehicle door ≥ 0.5 m/s², and the edge covering speed of the vehicle door < 2 m/s, the manual assistance mode is entered. The speed threshold and the acceleration threshold are only used as an example.

Actuating actions in the manual assistance mode mainly include: The controller 150 controls the actuating mechanism 120 to provide the vehicle door 110 with a driving force in a direction the same as a movement direction of the vehicle door. The driving force in the direction the same as the movement direction of the vehicle door can overcome the mechanically internal resistance of the vehicle door system, and therefore an operating force fed back to the hand of the user is small. According to a conventional manually operated vehicle door, it may be specified that the operating force for the hand is not greater than 50 N.

Further, when the vehicle door moves in the door opening direction, the controller 150 is configured to obtain environment information on a movement path of the vehicle door in real time, and control the actuating mechanism 120 to stop providing the driving force if the controller 150 determines according to the environment information that an obstacle exists on the movement path of the vehicle door. When determining that an obstacle exists on the movement path of the vehicle door, the controller 150 may further perform control to send prompt information to prompt the user. For example, in a process of assisting in opening the vehicle door, the controller 150 wakes the sensor 140 up, the sensor 140 in a wake-up state detects information about an obstacle around the vehicle door 110 in real time, and the user is reminded of a status of the obstacle through a warning sound or a central control display screen or in another manner when the obstacle is detected. If the user ignores the warning, and continues to apply an external force to the vehicle door 110, the controller 150 is configured to control the actuating mechanism 120 to stop providing the driving force for the vehicle door 110, and the user may manually overcome the mechanical internal resistance of the vehicle door, to drive the vehicle door 110 to open.

For example, when the vehicle door moves in the door closing direction, the controller 150 is configured to obtain force information of the vehicle door in real time, and the controller 150 is configured to control the actuating mechanism 120 to stop providing the driving force if it is determined according to the force information that the vehicle door 110 is subjected to a force preventing the vehicle door from moving. When determining that the vehicle door 110 is subjected to the force preventing the vehicle door from moving, the controller 150 may further perform control to send prompt information to prompt the user. For example, in a process of manual assistance in a door closing direction, if the controller 150 detects an external force preventing the door from closing (for example, the controller 150 detects that the current of the actuating mechanism 120 exceeds the preset threshold, for example, exceeds 7 A; or the controller 150 detects a Hall change in a short time), the user is reminded of a status of the obstacle through a warning sound or a central control display screen or in another manner. If the user ignores the warning, and continues to apply an external force to the vehicle door 110, the controller 150 is configured to control the actuating mechanism to stop providing the driving force for the vehicle door 110, and the user may manually overcome the mechanical internal resistance of the vehicle door, to drive the vehicle door 110 to close.

If the vehicle door reaches a door lock position, and the controller 150 detects a jump signal of the door lock 130 from full-unlock to half-lock, the actuating mechanism 120 stops working, and the controller 150 controls the door lock 130 to perform automatic suction from a half-lock position to full-lock, to complete a door closing action.

For example, the user may set a door opening or closing habit for the manual assistance mode in advance. In a case that the door can be opened or closed in need of a force of 100 N before assistance is provided, if a door opening or closing habit of the user is set to lightness, the user can open or close the door as long as a force of 30 N is provided, and the actuating mechanism 120 provides a force of 70 N; if a door opening or closing habit of the user is set to intermediation, the user needs to provide a force of 50 N, and the actuating mechanism 120 provides a force of 50 N, to open or close the door; and if a door opening or closing habit of the user is set to heaviness, the actuating mechanism 120 provides a force of only 30 N, and the user needs to provide a force of 70 N, to open or close the door.

### 2. Manual slam-proof protection mode

The manual slam-proof protection mode is configured to provide slam-proof protection for the vehicle door when the door is manually opened or closed. A working condition of the manual slam-proof protection mode may be any operating condition.

A trigger condition of the manual slam-proof protection mode includes at least:
(1) The manual slam-proof protection mode is in an on state; and
(2) The controller 150 obtains an initial acceleration and an edge covering speed of the vehicle door 110, and determines that the initial acceleration is greater than or equal to the second acceleration threshold and the edge covering speed of the vehicle door is greater than or equal to the second speed threshold. When an external input force acts on the vehicle door 110, the vehicle door 110 is subjected to the external force to generate an initial acceleration. If the initial acceleration is greater than or equal to the second acceleration threshold and the edge covering speed is greater than or equal to the second speed threshold, it indicates that the user has an intention of opening or closing the door, and the door opening or closing speed is greater than an expected speed, that is, the user applies an excessively large force. The vehicle door system may detect the magnitude of the initial acceleration through a Hall sensor attached to an electric limiter. When the initial acceleration of the vehicle door ≥ 0.5 m/s², and the edge covering speed of the vehicle door ≥ 2 m/s, the manual slam-proof protection mode is entered. The thresholds are only used as an example. In addition, the second acceleration threshold may be equal to the first acceleration threshold, and the second speed threshold may alternatively be equal to the first speed threshold.

Actuating actions in the manual slam-proof protection mode mainly include: The controller 150 controls the actuating mechanism to provide the vehicle door 110 with a driving force in a direction opposite to the movement direction of the vehicle door. The driving force in the direction opposite to the movement direction of the vehicle door can overcome an external input acting force of the vehicle door system, to reduce the door closing speed.

Specifically, in a process of door slamming in the door opening direction, the controller 150 causes the vehicle door to decelerate and stop before the vehicle door moves to a mechanical total travel stop position, to prevent the vehicle door from coming into contact with the total travel stop position with a door slamming load. The total travel stop position refers to a maximum position in which the actuating mechanism 120 can perform mechanical opening. There are two door opening positions for the vehicle door. One door opening position is a maximum mechanical door opening position the same as conventional mechanical door opening, that is, the foregoing total travel stop position; and the other door opening position is a maximum opening position to which the actuating mechanism 120 drives the vehicle door 110 to open in the automatic door opening mode, and the position may be referred to as a soft stop position. To avoid a case that an impact is caused to the limiter of the vehicle door each time the door is opened, the vehicle door is not opened to the total travel stop position in the automatic door opening mode, that is, a door opening angle in the total travel stop position > a door opening angle in the soft stop position. For example, a door opening angle in the total travel stop position is 90°, and then a door opening angle in the soft stop position is less than 90°.

Specifically, in a process of door slamming in the door closing direction, the controller 150 causes the vehicle door to decelerate and stop before the vehicle door 110 reaches the door lock position.

In some embodiments, if the vehicle door is smashed when the vehicle door forms a very small angle with the total travel stop position or the door lock position, movement of the vehicle door may only decelerate but does not stop. If the vehicle door reaches the door lock position, the vehicle door performs automatic suction from the half-lock position to the full-lock position.

Further, in the manual slam-proof protection mode, when the vehicle door moves in the door opening direction, the controller 150 is configured to obtain environment information on a movement path of the vehicle door in real time, and output prompt information if it is determined according to the environment information that an obstacle exists on the movement path of the vehicle door. For example, the controller 150 wakes the sensor 140 up, and the sensor 140 detects information about an obstacle around the vehicle door 110 in real time. If the vehicle door 110 encounters an obstacle in a door opening process, the sensor 140 feeds a detected obstacle signal back to the controller 150, and the user is reminded through the central control display screen, or the user is reminded through a buzzing sound frequency.

In addition, when the vehicle door moves in the door closing direction, the controller 150 is configured to obtain force information of the vehicle door in real time, and output prompt information if it is determined according to the force information that the vehicle door is subjected to a force preventing the vehicle door from moving. Specifically, in a process of closing the vehicle door 110, if the controller detects an external force preventing the vehicle door from closing, that is, the vehicle door encounters an obstacle to trigger pinch-proof, the controller 150 detects a signal indicating that a large current occurs in the actuating mechanism 120, and the user is reminded through the central control display screen, or the user is reminded through a buzzing sound frequency.

### 3. Manual interference mode

The manual interference mode is configured to interfere with a movement speed of the vehicle door in response to action of an external force. A working condition of the manual interference mode may be any operating condition. When the actuating mechanism 120 drives the vehicle door 110 to open or close, the controller 150 is configured to obtain edge covering speed information of the vehicle door in real time. If it is determined according to the edge covering speed information that the edge covering speed of the vehicle door is not equal to a third speed threshold, the controller is configured to control the actuating mechanism to drive the vehicle door to move at the third speed threshold, to satisfy the demand of the user for the door closing speed.

A trigger condition of the manual interference mode mainly includes:
(1) In a process in which the controller 150 controls the actuating mechanism 120 to drive the vehicle door 110 to open or close (that is, the vehicle door automatically opens or closes, and the initial speed of the vehicle door is not 0), the user applies an acting force in a direction the same as the movement direction to the vehicle door 110, and the controller 150 detects the acting force.
(2) The initial acceleration of the vehicle door 110 is greater than or equal to a third acceleration threshold, and the edge covering speed of the vehicle door 110 is less than a third speed threshold. For example, when the initial acceleration of the vehicle door ≥ 0.5 m/s², and the edge covering speed of the vehicle door < 2 m/s, the manual interference mode is entered. The thresholds are only used as an example. In addition, the third acceleration threshold may be equal to the first acceleration threshold, and the third speed threshold may alternatively be equal to the first speed threshold.

The trigger condition indicates that the vehicle door is briefly accelerated, the controller 150 detects that the vehicle door is not opened or closed at a predetermined speed (for example, 2 m/s), and the user applies an acting force in a direction the same as the movement direction of the vehicle door in this case, indicating that the user considers that the vehicle door is opened or closed at an excessively low speed. Therefore, the controller 150 adjusts the driving force of the actuating mechanism 120, and finally the vehicle door is opened or closed at the set speed stably and constantly, thereby satisfying the demand of the user.

Another trigger condition of the manual interference mode includes:
(1) In a process in which the controller 150 controls the actuating mechanism 120 to drive the vehicle door 110 to open or close (that is, the vehicle door automatically opens or closes, and the initial speed of the vehicle door is not 0), the user applies an acting force in a direction opposite to the movement direction to the vehicle door 110, and the controller 150 detects the acting force.
(2) The controller 150 detects that the user applies an acting force less than a preset pinch-proof force (for example, 100 N), and then the manual interference mode is entered, where the controller 150 may detect the acting force applied by the user by detecting a change of the current of the actuating mechanism 120 (for example, the current < 7 A) or a Hall change in a short time. Otherwise, if the external force applied to the vehicle door is greater than the pinch-proof force, the controller 150 controls the vehicle door to be suspended.

Under the trigger condition, actuating actions in the manual interference mode mainly include: The vehicle door is briefly decelerated, the controller 150 detects that the vehicle door is not opened or closed at a predetermined speed, and the user applies an acting force in a direction opposite to the movement of the vehicle door in this case, indicating that the user considers that the vehicle door is opened or closed at an excessively high speed. Therefore, the controller 150 adjusts the driving force of the actuating mechanism 120, and finally the vehicle door is opened or closed at the set speed stably and constantly.

Descriptions are made above using an example in which the user applies an acting force to trigger the manual interference mode, but the acting force for triggering the manual interference mode is not limited to action of an operating force of a hand of the user. For example, when the vehicle is on a ramp, a component force of the gravity of the vehicle door is input to the vehicle door system; or under a gust operating condition, the vehicle door is subjected to an input force applied by a wind force, and the manual interference mode may also be triggered.

### 4. Manual trend door closing mode

The manual trend door closing mode is configured to automatically close the vehicle door when a closing trend of the user is sensed. When using a conventional vehicle door, a user is accustomed to closing the vehicle door without extra trouble after getting off. Based on the foregoing use habit of the user, and given that even if there is an automatic door closing function, it is very inconvenient to operate an interaction button or a central control screen if the user is out of the vehicle, the manual trend door closing mode is defined.

Specifically, when the vehicle door is motionless, if the vehicle door is manually pushed once, the vehicle door system detects that there is no door opening/closing instruction, and detects that there is a condition for triggering manual trend door closing. In this case, the vehicle door system determines that there is an external force operation intending to close the vehicle door, and the manual trend door closing function is not manually shielded by the user. Then, the vehicle door system automatically performs a related action of closing the vehicle door.

A working condition of the manual trend door closing mode may be any operating condition. A trigger condition of the manual trend door closing mode includes:
(1) In the vehicle door system, the manual trend door closing mode is in an on state, and the manual assistance mode is set to an off state; and the vehicle door 110 is in a suspended state or an opened state (that is, an initial speed of the vehicle door is 0).
(2) The vehicle door 110 is subjected to an external force to generate an initial acceleration, and the controller 150 obtains acceleration information and edge covering speed information of the vehicle door and determines that the vehicle door 110 has an acceleration. If the initial acceleration is greater than or equal to a fourth acceleration threshold (for example, 0.5 m/s²), and the edge covering speed of the vehicle door 110 is less than a fourth speed threshold (for example, 2 m/s), it is considered that the user intends to close the vehicle door. In this case, the vehicle door 110 automatically closes.

Actuating actions in the manual trend door closing mode mainly include: The controller 150 controls the actuating mechanism 120 to drive the vehicle door 110 to close.

Further, when detecting a signal change of the door lock 130 from full-unlock to half-lock, the controller 150 drives the door lock 130 to perform automatic suction, to complete locking.

Further, when the vehicle door 110 forms a very small angle with the door lock position, the actuating mechanism 120 unnecessarily performs triggering. In this case, when detecting a signal change of the door lock 130 from full-unlock to half-lock, the controller 150 drives the door lock 130 to perform automatic suction, to complete locking.

### 4. Feeding manual mode

The manual mode described above may be referred to as a live manual mode, that is, the vehicle door system can provide a power source for the actuating mechanism. In addition to the live manual mode, the vehicle door system further supports the feeding manual mode. A working condition of the feeding manual mode may be any operating condition. A trigger condition of the feeding manual mode includes at least: The vehicle door system cannot provide a power source for the actuating mechanism, and the vehicle door system can perform a manual operation.

The vehicle door system in the feeding manual mode is similar to a conventional vehicle door. In the mode, the user is required to provide all input forces required for movement of the vehicle door. If necessary, in the feeding manual mode, the vehicle door system may maintain safety-off /unlocking of the vehicle door, automatic suction of the door lock, and electric release of the door lock through a standby power source for the door lock. If no standby power source is available, a mechanical key needs to be reserved for the outer handle of the vehicle, and an in-vehicle emergency opening cable needs to be reserved in the vehicle. When the power supply of the vehicle door system is restored, the vehicle door system returns to another mode in dependence on a request of the vehicle.

FIG. 2 shows a logic diagram of a control policy for switching between the foregoing different function modes. Three special switching modes between states and working modes of the vehicle door, and twelve regular switching modes between working modes of the vehicle door are included.

Specifically, the three special switching modes are separately: a special switching mode A, in which the vehicle door 110 is switched from a closed state to an electric mode; a special switching mode B, in which the vehicle door 110 is switched from a maximum opening degree state to the electric mode; and a special switching mode C, in which the vehicle door 110 is switched from the maximum opening degree state to a live manual mode.

The special switching mode A is to switch the vehicle door from the closed state to the electric mode. In the closed state of the vehicle door 110, if the vehicle door system detects a door opening signal of a central control screen, locking of a safety belt, a voice, an inner door handle, an in-vehicle button, an outer handle, NFC, an electronic key, knocking, a gesture, or the like, and actuating actions include that the door lock 130 performs electric unlocking and the controller 150 detects a change of the door lock 130 from full-lock to half-lock and then to full-unlock, the sensor 140 is woken up, the electric mode is entered, and the actuating mechanism 120 is controlled to drive the vehicle door to open.

The special switching mode B is to switch the vehicle door 110 from the maximum opening degree state to the electric mode. In the maximum opening degree state of the vehicle door 110, if the vehicle door system detects a door closing signal of a central control screen, locking of a safety belt, a voice, an inner door handle, an in-vehicle button, an outer handle, a gesture, braking, or the like, the vehicle door is automatically switched to the electric mode, and the actuating mechanism 120 is controlled to drive the vehicle door 110 to close.

The special switching mode C is to switch the vehicle door 110 from the maximum opening degree state to the live manual mode. The special switching mode C further includes: The vehicle door 110 is switched from the maximum opening degree state to a manual assistance mode, a manual slam-proof protection mode, a manual interference mode, or a manual trend door opening/closing mode in the live manual mode.

The switching from the maximum opening degree state to the manual assistance mode includes:
In the maximum opening degree state of the vehicle door 110, if the manual assistance mode of the vehicle door system is on, an external input force acts on the vehicle door system, the vehicle door obtains an initial acceleration, and the vehicle door system obtains acceleration information of the vehicle door 110 through the acceleration sensor integrated in the actuating mechanism 120, the manual assistance mode is entered. The Hall sensor attached to the actuating mechanism 120 may obtain vehicle door state information, and the edge covering speed of the vehicle door may be obtained through a corresponding algorithm. For example, when the initial acceleration of the vehicle door ≥ 0.5 m/s², and the edge covering speed of the vehicle door < 2 m/s, the manual assistance mode is entered. The speed threshold and the acceleration threshold are only used as an example.

After switching to the manual assistance mode, the vehicle door system performs an actuating action in the manual assistance mode, that is, the actuating mechanism 120 provides a driving force in a direction the same as the movement direction of the vehicle door 110, where the driving force is used for overcoming the mechanical internal resistance of the vehicle door system. Therefore, an operating force fed back to a hand of the user is small. In addition, in a process of manual assistance in the door closing direction, if the vehicle door 110 encounters an obstacle, and the controller 150 detects an external force preventing the door from closing, the suspended mode is entered, and the user is reminded of a status of the obstacle. If the user ignores the warning and continues to manually operate, the actuating mechanism 120 stops providing assistance, and the user may manually overcome the mechanical internal resistance of the vehicle door, to drive the vehicle door to close.

If the vehicle door reaches a door lock position, and the controller 150 detects a jump signal of the door lock 130 from full-unlock to half-lock, the actuating mechanism 120 stops working, and the controller 150 controls the door lock 130 to perform automatic suction from a half-lock position to full-lock, to complete a door closing action.

The switching from the maximum opening degree state to the manual slam-proof protection mode includes:
In the maximum opening degree state of the vehicle door 110, if the manual slam-proof protection mode of the vehicle door system is on, when an external input force acts on the vehicle door system, the vehicle door 110 obtains an initial acceleration, and the vehicle door system detects the magnitude of the initial acceleration of the vehicle door through the Hall sensor attached to the actuating mechanism 120. If the initial acceleration of the vehicle door and the edge covering speed of the vehicle door enter specific ranges, switching to the manual slam-proof protection mode is performed. In the manual slam-proof protection mode, the actuating mechanism 120 provides a driving force in a direction opposite to the movement direction of the vehicle door, where the driving force is used for overcoming an external input driving force of the vehicle door system.

Specifically, in a process of door slamming in the door closing direction, the vehicle door system causes the vehicle door to decelerate and stop before the vehicle door 110 reaches the door lock position. In addition, in a process of closing the door, if an obstacle is encountered to trigger pinch-proof, and the controller 150 detects a signal indicating that a large current occurs in the actuating mechanism 120, the user is reminded on the central control display screen, or the user is reminded through a buzzing sound frequency.

The switching from the maximum opening degree state to the manual trend door closing mode includes: If the manual trend door closing mode is set to be on and the manual assistance mode is set to be off in the vehicle door system, it is considered that the user intends to close the vehicle door when the vehicle door system detects that the acceleration of the vehicle door 110 and the edge covering speed of the vehicle door enter specific ranges. In this case, the controller 150 controls the actuating mechanism 120 to drive the vehicle door to perform a door closing action. After detecting a signal change of the door lock 130 from full-unlock to half-lock, the controller 150 drives the door lock 130 to perform automatic suction, to complete locking.

The twelve regular switching modes mainly include twelve types of combination switching between the four different working modes (the electric mode, the suspended mode, the live manual mode, and the feeding manual mode) of the vehicle door system.

The regular switching mode 1 is to switch the vehicle door from the electric mode to the suspended mode, and its trigger condition includes any one of the following: (1) obtaining a suspension button signal, or another signal conflicting with a door opening or closing signal; and (2) in a process of opening or closing the vehicle door, detecting an obstacle, and performing obstacle avoidance or pinch-proof protection. In this case, the vehicle door is switched from the electric mode to the suspended mode, door opening or closing is stopped, and the suspended state is entered.

The regular switching mode 2 is to switch the vehicle door from the suspended mode to the electric mode, and its trigger condition includes that the vehicle door system detects an external input door opening or closing instruction in the suspended state. In this case, the vehicle door is switched from the suspended state to the electric mode, and the vehicle door is automatically opened or closed.

The regular switching mode 3 is to switch the vehicle door from the suspended mode to the live manual mode, and specifically includes:

The regular switching mode 3.1 is to switch the vehicle door from the suspended mode to the manual assistance mode, and its trigger condition includes:
(1) In the vehicle door system, the manual assistance mode is on.
(2) In the suspended mode, when an external input force acts on the vehicle door system, the vehicle door 110 obtains an initial acceleration, and the vehicle door system may obtain vehicle door acceleration information through the acceleration sensor integrated in the actuating mechanism 120. The Hall sensor attached to the actuating mechanism 120 may obtain vehicle door state information, and the edge covering speed of the vehicle door may be obtained through a corresponding algorithm. If the acceleration of the vehicle door is greater than a specific threshold and the edge covering speed of the vehicle door is less than a specific threshold, the manual assistance mode is entered.

In the manual assistance mode, the actuating mechanism 120 provides a driving force in a direction the same as the movement direction of the vehicle door, where the driving force is used for overcoming the mechanical internal resistance of the vehicle door system. In a process of manual assistance in the door closing direction, if an obstacle is encountered, and the controller 150 detects an external force preventing the door from closing, the suspended mode is entered. In a process of manual assistance in the door opening direction, the sensor 140 in a wake-up state detects information about an obstacle in a movement process of the vehicle door in real time, and the user is reminded of a status of the obstacle through a warning sound or a central control display screen. If the vehicle door reaches a door lock position, and the controller 150 detects a jump signal of the door lock 130 from full-unlock to half-lock, the actuating mechanism 120 stops working, and the controller 150 controls the door lock 130 to perform automatic suction from a half-lock position to full-lock, to complete a door closing action.

The regular switching mode 3.2 is to switch the vehicle door 110 from the suspended state to the manual slam-proof protection mode, and its trigger condition includes:
(1) In the vehicle door system, the manual slam-proof protection mode is on.
(2) When an external input force acts on the vehicle door system, the vehicle door obtains an initial acceleration. If each of the initial acceleration of the vehicle door and the edge covering speed of the vehicle door is greater than a specific threshold, the manual slam-proof protection mode is entered. In the manual slam-proof protection mode, the actuating mechanism 120 provides a driving force in a direction opposite to the movement direction of the vehicle door, where the driving force is used for overcoming an external input driving force of the vehicle door system.

Specifically, in a process of door slamming in the door opening direction, the actuating mechanism 120 causes the vehicle door to decelerate and stop before the vehicle door 110 moves to the mechanical total travel stop position. The vehicle door system prevents the vehicle door from coming into contact with the total travel stop position with a door slamming load. In a process of door slamming in the door closing direction, the vehicle door system causes the vehicle door to decelerate and stop before the vehicle door reaches the door lock position. When the vehicle door is smashed when the vehicle door forms a very small angle with the total travel stop position or the door lock position, movement of the vehicle door may only decelerate but does not stop. If the vehicle door reaches the door lock position, the vehicle door performs automatic suction from the half-lock position to the full-lock.

In the manual slam-proof protection mode, if an obstacle is encountered in a door opening process, the sensor 140 feeds a detected obstacle signal back to the controller 150, and the user is reminded of information about the obstacle. If an obstacle is encountered in a process of closing the door to trigger pinch-proof, and the controller 150 detects a signal indicating that a large current occurs in the motor, the user is reminded of information about the obstacle.

The regular switching mode 3.3 is to switch the vehicle door from the suspended state to the manual trend door closing mode, and its trigger condition includes:
(1) In the vehicle door system, the manual trend door closing mode is on, the manual assistance mode is set to be off, and the vehicle door 110 is in the suspended state or the maximum opening degree state.
(2) When the vehicle door system detects that the acceleration of the vehicle door is greater than a specific threshold and the edge covering speed of the vehicle door is less than a specific threshold, it is considered that the user intends to close the vehicle door. In this case, the vehicle door is automatically closed, and the controller 150 controls the actuating mechanism 120 to perform a door closing action, and drives, when detecting a signal change of the door lock 130 from full-unlock to half-lock, the door lock 130 to perform automatic suction, to complete locking. For example, if the vehicle door forms a very small angle with the door lock position, the actuating mechanism 120 may alternatively not perform triggering. Instead, the controller 150 detects a signal change of the door lock 130 from full-unlock to half-lock, and drives the door lock 130 to perform automatic suction, to complete locking.

The regular switching mode 4 is to switch the vehicle door from the live manual mode to the suspended mode, and specifically includes the following several types:

The regular switching mode 4.1 is to switch the vehicle door from the manual assistance mode to the suspended mode, and its trigger condition includes: In the manual assistance mode, if the vehicle door detects no external operating force, the suspended mode is entered.

The regular switching mode 4.2 is to switch the vehicle door from the manual slam-proof protection mode to the suspended mode, and its trigger condition includes any one of the following: (1) In the vehicle door slam-proof protection mode, the vehicle door completes decelerating, and stops moving. (2) In a process of opening or closing the vehicle door, an obstacle is encountered to prevent the vehicle door from moving.

The regular switching mode 4.3 is to switch the vehicle door from the manual trend door closing mode to the suspended mode, and its trigger condition includes: In a closing process of the vehicle door, an obstacle is encountered to trigger pinch-proof.

The regular switching mode 5 is to switch the vehicle door from the electric mode to the live manual mode. When the vehicle door system detects an external input force in a direction the same as the movement direction of the vehicle door, whether the vehicle door system is switched to the manual assistance mode or the manual slam-proof protection mode may be determined according to the initial acceleration of the vehicle door. If the initial acceleration of the vehicle door is greater than or equal to a specific threshold and the edge covering speed of the vehicle door is less than a specific threshold, the manual interference mode is entered. If the initial acceleration of the vehicle door is greater than a specific threshold and the edge covering speed of the vehicle door is greater than or equal to a specific threshold, the manual slam-proof protection mode is entered. When the vehicle door system detects an external input force in a direction opposite to the movement direction of the vehicle door, if an acting force value is less than a pinch-proof force, the manual interference mode is entered.

The regular switching mode 6 is to switch the vehicle door from the live manual mode to the electric mode, and specifically includes the following two types:

The regular switching mode 6.1 is to switch the vehicle door from the manual interference mode to the electric mode, and its trigger condition includes: an external interference operating force disappears, the acceleration of the vehicle door is changed, and the vehicle door system is restored to the electric mode.

The regular switching mode 6.2 is to switch the vehicle door from the manual trend door closing mode to the electric mode, and its trigger condition includes: an external interference operating force disappears, the acceleration of the vehicle door is changed, the controller 150 drives the actuating mechanism 120 to drive the vehicle door to perform a door closing action, and the vehicle door system is restored to the electric mode.

The regular switching mode 7 is to switch the vehicle door from the electric mode to the feeding manual mode, and its trigger condition includes that the whole vehicle system performs feeding and the vehicle door system has no standby power source.

The regular switching mode 8 is to switch the vehicle door from the suspended mode to the feeding manual mode, and its trigger condition includes that the whole vehicle system performs feeding and the vehicle door system has no standby power source.

The regular switching mode 9 is to switch the vehicle door from the live manual mode to the feeding manual mode, and its trigger condition includes that the whole vehicle system performs feeding and the vehicle door system has no standby power source.

The regular switching mode 10 is to switch the vehicle door from the feeding manual mode to the electric mode, and its trigger condition includes that the whole vehicle system is powered on or the vehicle door system has a standby power source; and the vehicle door system obtains a door opening or closing signal.

The regular switching mode 11 is to switch the vehicle door from the feeding manual mode to the suspended mode, and its trigger condition includes that the whole vehicle system is powered on or the vehicle door system has a standby power source.

The regular switching mode 12 is to switch the vehicle door from the feeding manual mode to the live manual mode, and its trigger condition includes that the whole vehicle system is powered on or the vehicle door system has a standby power source.

Based on the foregoing descriptions, in the embodiments of the present disclosure, the vehicle door system is classified into different working modes, and input and output in the different working modes and trigger conditions for switching between the different working modes are clarified. In an algorithm programming stage, algorithm programming may be directly implemented separately for the different working modes based on the foregoing working modes, and the working modes are integrated with each other. Compared with non-modularization design, it is more convenient to organize content, thereby improving efficiency.

The embodiments of the present disclosure further provide a vehicle, including a vehicle body and the foregoing vehicle door system. For example, the vehicle body is mechanically coupled and connected to a vehicle door of the vehicle door system. The vehicle of the embodiments of the present disclosure includes the foregoing vehicle door system, and therefore also has similar advantages.

Although exemplary embodiments have been described with reference to accompanying drawings, it should be understood that the above exemplary embodiments are only illustrative, and not intended to limit the scope of the present disclosure thereto. Various changes and modifications can be made by a person of ordinary skill in the art without departing from the scope and spirit of the present disclosure. All these changes and modifications are intended to be embraced in the scope of the present disclosure as defined in the appended claims.

A person of ordinary skill in the art may notice that the exemplary units and algorithm steps described with reference to the embodiments disclosed in this specification can be implemented in electronic hardware, or a combination of computer software and electronic hardware. Whether the functions are executed in a mode of hardware or software depends on particular applications and design constraint conditions of the technical solutions. A person skilled in the art may use different methods to implement the described functions for each particular application, but it is not to be considered that the implementation goes beyond the scope of the present disclosure.

In the several embodiments provided in the present disclosure, it should be understood that the disclosed device and method may be implemented in other manners. For example, the described device embodiment is merely an example. For example, the unit division is merely logical function division and may be other division in actual implementation. For example, a number of units or components may be combined or integrated into another device, or some features may be ignored or not performed.

Numerous specific details are set forth in the specification provided herein. However, it can be understood that, the embodiments of the present disclosure may be practiced without the specific details. In some examples, known methods, structures, and technologies are not disclosed in detail, so as not to mix up understanding on the specification.

Similarly, it should be understood that to simplify the present disclosure and help to understand one or more of disclosure aspects, in the descriptions of the exemplary embodiments of the present disclosure, features of the present disclosure are sometimes grouped into a single embodiment or figure, or descriptions thereof. However, the methods in the present disclosure should not be construed as reflecting the following intention: that is, the present disclosure claimed to be protected is required to have more features than those clearly set forth in each claim. More definitely, as reflected in the corresponding claims, the inventiveness of the disclosure lies in resolving the corresponding technical problem using features less than all features of a single embodiment disclosed above. Therefore, the claims following the Detailed Description are hereby expressly incorporated into the Detailed Description, with each claim standing on its own as a separate embodiment of the present disclosure.

A person skilled in the art may understand that, all features disclosed in this specification (including the appended claims, abstract and drawings), and all processes or units of any method or device disclosed herein may be combined in any combination, unless features are mutually exclusive. Unless otherwise explicitly stated, each feature disclosed in this specification (including the appended claims, abstract and drawings) may be replaced with an alternative feature serving the same, equivalent or similar purpose.

In addition, those skilled in the art can understand that, although some embodiments herein include some but not other features included in other embodiments, combinations of features of different embodiments are meant to be within the scope of the present disclosure and to form different embodiments. For example, in the claims, any one of the claimed embodiments may be used in any combination.

The various component embodiments of the present disclosure may be implemented in hardware or in software modules running on one or more processors or in a combination thereof. A person skilled in the art should understand that a microprocessor or a digital signal processor (DSP) may be used in practice to implement some or all of the functions of some modules according to the embodiments of the present disclosure. The present disclosure may alternatively be implemented as an apparatus program (for example, a computer program and a computer program product) for performing part or all of the methods described herein. Such a program that implements the present disclosure may be stored on a computer-readable medium or may be in the form of one or more signals. Such signals may be downloaded from Internet websites, provided on carrier signals, or provided in any other form.

It should be noted that the above-mentioned embodiments illustrate rather than limit the present disclosure, and those skilled in the art may devise alternative embodiments without departing from the scope of the appended claims. In the claims, any reference signs placed between parentheses shall not be construed as limiting the claims. The present disclosure can be implemented by way of hardware including several different elements and an appropriately programmed computer. In the unit claims enumerating several apparatuses, several of these apparatuses can be specifically embodied by the same item of hardware. The use of the terms such as "first", "second", "third", and the like does not denote any order. These terms can be interpreted as names.

## Claims

1. A vehicle door system, comprising a vehicle door, an actuating mechanism, and a controller,
the vehicle door being mechanically coupled and connected to a vehicle body;
the actuating mechanism being connected to the vehicle door and is configured to control a state of the vehicle door; and
the controller being configured to control, according to a current working mode of the vehicle door system, the actuating mechanism to control the state of the vehicle door,
wherein the working mode comprises at least:
an electric mode, wherein in the electric mode, the controller is configured to control the actuating mechanism to drive the vehicle door to open or close;
a suspended mode, wherein in the suspended mode, the controller is configured to control the actuating mechanism to keep the vehicle door suspended; and
a manual mode, wherein in the manual mode, the controller is configured to control, according to an external force acting on the vehicle door, the actuating mechanism to drive the vehicle door to move.

2. The vehicle door system according to claim 1, wherein the manual mode comprises at least one of the following: a manual assistance mode, a manual slam-proof protection mode, a manual interference mode, and a manual trend door closing mode, wherein
in the manual assistance mode, the controller is configured to control the actuating mechanism to provide the vehicle door with a driving force in a direction the same as a movement direction of the vehicle door;
in the manual slam-proof protection mode, the controller is configured to control the actuating mechanism to provide the vehicle door with a driving force in a direction opposite to the movement direction of the vehicle door;
in the manual interference mode, the controller is configured to control, according to the external force applied to the vehicle door, the actuating mechanism to drive the vehicle door to open or close at a preset speed; and
in the manual trend door closing mode, the controller is configured to control, according to manual door closing trend information, the actuating mechanism to drive the vehicle door to close.

3. The vehicle door system according to claim 2, wherein the manual assistance mode comprises:
when the manual assistance mode is in an on state, the controller is configured to obtain an initial acceleration and an edge covering speed of the vehicle door; and
when the initial acceleration is greater than or equal to a first acceleration threshold and the edge covering speed of the vehicle door is less than a first speed threshold, the controller is configured to control the actuating mechanism to provide the vehicle door with a driving force in a direction the same as the movement direction of the vehicle door.

4. The vehicle door system according to claim 3, wherein the manual assistance mode further comprises:
when the vehicle door moves in a door opening direction, the controller is configured to obtain environment information on a movement path of the vehicle door in real time; and
if it is determined according to the environment information that an obstacle exists on the movement path of the vehicle door, the controller is configured to control the actuating mechanism to stop providing the driving force.

5. The vehicle door system according to claim 3 or 4, wherein the manual assistance mode further comprises:
when the vehicle door moves in a door closing direction, the controller is configured to obtain force information of the vehicle door in real time; and
if it is determined according to the force information that the vehicle door is subjected to a force preventing the vehicle door from moving, the controller is configured to control the actuating mechanism to stop providing the driving force.

6. The vehicle door system according to any one of claims 2 to 5, wherein the manual slam-proof protection mode comprises:
when the manual slam-proof protection mode is in an on state, the controller is configured to obtain an initial acceleration and an edge covering speed of the vehicle door; and
when the initial acceleration is greater than or equal to a second acceleration threshold and the edge covering speed of the vehicle door is greater than or equal to a second speed threshold, the controller is configured to control the actuating mechanism to provide the vehicle door with a driving force in a direction opposite to the movement direction of the vehicle door.

7. The vehicle door system according to claim 6, wherein the manual slam-proof protection mode further comprises:
when the vehicle door moves in the door opening direction, the controller is configured to obtain environment information on a movement path of the vehicle door in real time, and output prompt information if it is determined according to the environment information that an obstacle exists on the movement path of the vehicle door; and
when the vehicle door moves in the door closing direction, the controller is configured to obtain force information of the vehicle door in real time, and output prompt information if it is determined according to the force information that the vehicle door is subjected to a force preventing the vehicle door from moving.

8. The vehicle door system according to any one of claims 2 to 7, wherein the manual interference mode further comprises:
when the actuating mechanism drives the vehicle door to open or close, the controller is configured to obtain edge covering speed information of the vehicle door in real time; and
if it is determined according to the edge covering speed information that the edge covering speed is not equal to a third speed threshold, the controller is configured to control the actuating mechanism to drive the vehicle door to move at the third speed threshold.

9. The vehicle door system according to any one of claims 2 to 8, wherein the manual trend door closing mode comprises:
when the manual trend door closing mode is in an on state, the manual assistance mode is in an off state, and the vehicle door is in an opened state or a suspended state, the controller is configured to obtain acceleration information and edge covering speed information of the vehicle door; and
when it is determined according to the acceleration information that the initial acceleration is greater than or equal to a fourth acceleration threshold and the edge covering speed is less than a fourth speed threshold, the controller is configured to control the actuating mechanism to drive the vehicle door to close.

10. The vehicle door system according to any one of claims 1 to 9, wherein the electric mode comprises at least one of an automatic door opening mode and an automatic door closing mode,
wherein
in the automatic door opening mode, the controller is configured to control the actuating mechanism to drive the vehicle door to open; and
in the automatic door closing mode, the controller is configured to control the actuating mechanism to drive the vehicle door to close.

11. The vehicle door system according to claim 10, wherein the automatic door opening mode comprises:
when the vehicle door is closed, if the controller is configured to obtain a door opening instruction, the controller is configured to control a door lock of the vehicle door to be unlocked, and control the actuating mechanism to drive the vehicle door to open.

12. The vehicle door system according to claim 11, wherein the automatic door opening mode further comprises:
before controlling the door lock of the vehicle door to be unlocked, the controller is configured to obtain environment information on a movement path of the vehicle door, and determine according to the environment information that no obstacle exists on the movement path of the vehicle door.

13. The vehicle door system according to claim 12, wherein that the controller is configured to control the actuating mechanism to drive the vehicle door to open further comprises:
if the controller determines according to the environment information that an obstacle exists on the movement path of the vehicle door, the controller is configured to control the vehicle door to be in the suspended state.

14. The vehicle door system according to claim 12 or 13, wherein that the controller is configured to control the actuating mechanism to drive the vehicle door to open further comprises:
the controller is configured to obtain force information of the vehicle door, and control the vehicle door to be in the suspended state if it is determined according to the force information that the vehicle door is subjected to a first resistance and the first resistance is greater than or equal to a first resistance value.

15. The vehicle door system according to any one of claims 10 to 14, wherein the automatic door closing mode comprises:
when the vehicle door is in the opened state or the suspended state, if the controller obtains a door closing instruction, the controller is configured to control the actuating mechanism to drive the vehicle door to close, and control the door lock of the vehicle door to be locked.

16. The vehicle door system according to claim 15, wherein that the controller is configured to control the actuating mechanism to drive the vehicle door to close comprises:
the controller is configured to obtain force information of the vehicle door, and control the vehicle door to be in the suspended state if it is determined according to the force information that the vehicle door is subjected to a second resistance and the second resistance is greater than or equal to a second resistance value.

17. The vehicle door system according to any one of claims 1 to 16, wherein the suspended mode comprises:
when the vehicle door moves in the door opening direction or the door closing direction, the controller is configured to control the vehicle door to be in the suspended state if the controller receives a suspension instruction.

18. A vehicle, comprising the vehicle door system according to any one of claims 1 to 17.
